(19) Europäisches Patentamt
European Patent Office
Office européen des brevets

(11) **EP 4 686 069 A1**

(12) **EUROPEAN PATENT APPLICATION**

(43) Date of publication:
**28.01.2026   Bulletin 2026/05**

(21) Application number: **24190108.1**

(22) Date of filing: **22.07.2024**

(51) International Patent Classification (IPC):
**H02M 1/42** (2007.01)      **H02M 7/217** (2006.01)
**H02M 5/22** (2006.01)

(52) Cooperative Patent Classification (CPC):
**H02M 1/4216; H02M 7/2173;** H02M 1/425;
H02M 1/4258; H02M 5/225

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Infineon Technologies Austria AG
9500 Villach (AT)**

(72) Inventors:
 • **ZHANG, Daifei
  8057 Zurich (CH)**
 • **HUBER, Jonas Emanuel
  5000 Aarau (CH)**

 • **KOLAR, Johann
  8044 Zurich (CH)**
 • **KASPER, Matthias Joachim
  9500 Villach (AT)**
 • **DEBOY, Gerald
  9061 Klagenfurt (AT)**

(74) Representative: **Westphal, Mussgnug  & Partner,
Patentanwälte mbB
Werinherstraße 79
81541 München (DE)**

Remarks:
Amended claims in accordance with Rule 137(2)
EPC.

(54) **METHOD FOR OPERATING A POWER CONVERTER AND POWER CONVERTER**

(57)    A power converter and a method for operating a operating a power converter are disclosed. The power converter includes three input nodes (a, b, c) each configured to receive a respective one of three alternating input voltages (Va, Vb, Vc), and an output (p, n); three transformers (1a, 1b, 1c) each comprising a first winding (11a, 11b, 11c) and a second winding (12a, 12b, 12c) inductively coupled with the first winding (11a, 11b, 11c); an input circuit (2) with three input stages (2a, 2b, 2c) each coupled to a respective one of the input nodes (a, b, c), the first winding (11a, 1 1b, 11c) of a respective one of the transformers (lb, 1b, 1c) and a common circuit node (o); and an output circuit (3) coupled to the second winding (12a, 12b, 12c) of each of the transformers (1a, 1b, 1c) and the output (p, n). The method includes detecting the lowest input voltage, which is that one of the input voltages (Va, Vb, Vc) having the lowest magnitude; connecting that one of the input nodes (a, b, c) receiving the lowest input voltage to the common circuit node (o) by the input stage connected to that one of the input nodes (a, b, c) receiving the lowest input voltage; and operating the other input stages in a switched mode in order to generate alternating voltages across the first windings connected the other input stages.

FIG 1

EP 4 686 069 A1

## Description

This disclosure relates in general to a method and a control circuit for operating a power converter, in particular a single stage three-phase PFC (Power Factor Correction) power converter.

Three-phase PFC power converters, which may also be referred to as PFC power rectifiers, are widely used in various kinds of power conversion applications. Examples of such applications include on-board chargers (OBC) for charging a battery of a vehicle, or power supplies for lighting, telecommunication, or computer server applications. A three-phase PFC rectifier is configured to generate a rectified output voltage based on three alternating input voltages each received at a respective input. Furthermore, in order to control a power factor, a three-phase PFC rectifier is configured to control current waveforms of input currents received at the inputs such that, for example, the input currents have the same waveform as the input voltages.

The input voltages received at the inputs are grid voltages received from a power grid, for example. In many cases it is desirable to provide a galvanic isolation between the inputs where the alternating input voltages are received and an output where the rectified output voltage is provided. A conventional three-phase PFC rectifier providing galvanic isolation between the input and the output may include two stages, a first stage configured to generate a rectified voltage (often referred to as a DC link voltage) based on the alternating input voltages, and a second stage configured to generate an output voltage based on the DC link voltage and to provide for a galvanic isolation between the first stage and the output. In this conventional three-phase PFC rectifier, the first stage usually includes three inductors and a DC link capacitor, and the second stage usually includes a transformer, an output capacitor and, optionally, an inductor in addition to the transformer. The inductors and the DC link capacitor are bulky and heavy and may take up to 50% of an overall size of the PFC rectifier.

There is a need for an improved three-phase PFC converter.

One example relates to a method for operating a power converter. The power converter includes: three input nodes each configured to receive a respective one of three alternating input voltages, and an output; three transformers each including a first winding and a second winding inductively coupled with the first winding; an input circuit with three input stages each coupled to a respective one of the input nodes, the first winding of a respective one of the transformers and a common circuit node; and an output circuit coupled to the second winding of each of the transformers and the output. The method includes: detecting the lowest input voltage, which is that one of the input voltages having the lowest magnitude; connecting that one of the input nodes receiving the lowest input voltage to the common circuit node by the input stage connected to that one of the input nodes receiving the lowest input voltage; and operating the other input stages in a switched mode in order to generate alternating voltages across the first windings connected the other input stages.

Another example relates to a power converter. The power converter includes three input nodes each configured to receive a respective one of three alternating input voltages, and an output; three transformers each including a first winding and a second winding inductively coupled with the first winding; an input circuit with three input stages each coupled to a respective one of the input nodes, the primary winding of a respective one of the transformers and a common circuit node; an output circuit coupled to the second winding of each of the transformers and the output; and a control circuit. The control circuit is configured to detect the lowest input voltage, which is that one of the input voltages having the lowest magnitude, operate the input stage connected to that one of the input nodes receiving the lowest input voltage such that the one of the input nodes receiving the lowest input voltage is connected to the common circuit node, and operate the other input stages in a switched mode in order to generate alternating voltages across the first windings connected the other input stages.

Examples are explained below with reference to the drawings. The drawings serve to illustrate certain principles, so that only aspects necessary for understanding these principles are illustrated. The drawings are not to scale. In the drawings the same reference characters denote like features.

Figure 1 illustrates one example of a power converter that includes three transformers, an input circuit coupled to first windings of the transformers, and an output circuit coupled to second windings of the transformer;

Figure 2 illustrates one example of a method for operating the power converter;

Figure 3 shows signal diagrams that illustrate one example for operating the power converter;

Figure 4 illustrates examples of the input circuit and the output circuit in greater detail;

Figure 5 shows signal diagrams that illustrate operating one input stage of the input circuit in a switched mode;

Figure 6 illustrates another example of the input circuit;

Figures 7-9 illustrates different examples of a bidirectionally blocking electronic switch.

In the following detailed description, reference

**EP 4 686 069 A1**

is made to the accompanying drawings. The drawings form a part of the description and for the purpose of illustration show examples of how the invention may be used and implemented. It is to be understood that the features of the various embodiments described herein may be combined with each other, unless specifically noted otherwise.

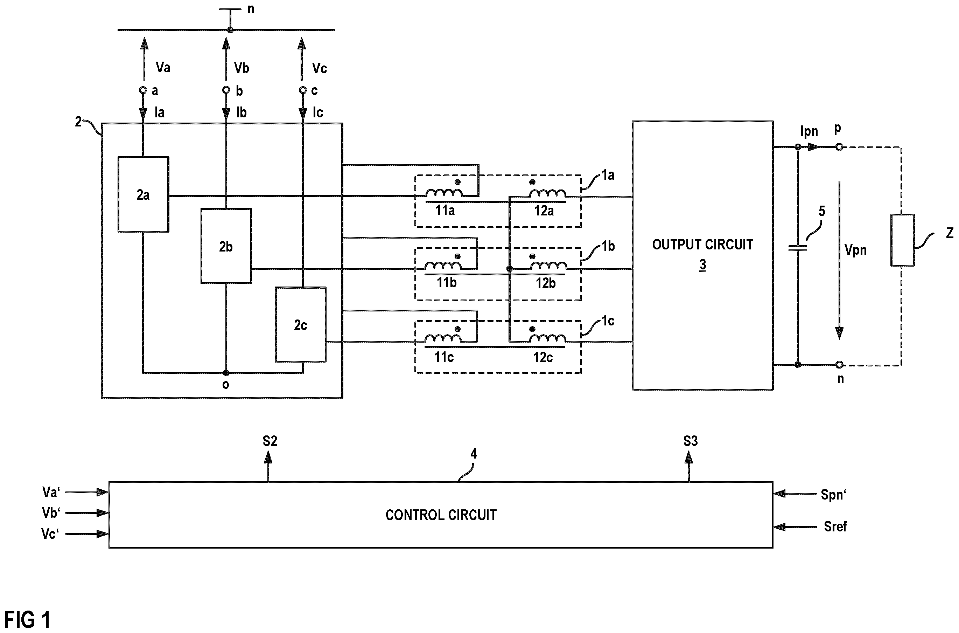

Figure 1 schematically illustrates a power converter according to one example. The power converter includes three input nodes a, b, c, an output p, n, three transformers 1a, 1b, 1c, an input circuit 2, and an output circuit 3. Each of the input nodes a, b, c is configured to receive a respective one of three alternating input voltages Va, Vb, Vc. According to one example, the alternating input voltages Va, Vb, Vc are referenced to a reference node n. Each of the transformers 1a, 1b, 1c includes a first winding 11a, 11b, 11c, which may also be referred to as primary winding, and a second winding 12a 12b, 12c, which may also be referred to as secondary winding. The second winding 12a, 12b, 12 of each transformers 1a, 1b, 1c is inductively coupled with the first winding 11a, 11b, 11c of the respective transformers 1a, 1b, 1c.

According to one example, the transformers 1a, 1b, 1c have the same winding ratio. According to one example, the winding ratio is selected from between 1/100 and 100/1 (0.01 and 100), in particular between 1/10 and 10/1 (0. 1 and 10).

Referring to Figure 1, the input circuit 2 includes three input stages 2a, 2b, 2c each coupled to a respective one of the input nodes a, b, c, the first winding 11a, 11b, 11c of a respective one of the transformers 1a, 1b, 1c (so that each input stage 2a, 2b, 2c is connected to exactly one first winding 11a, 11b, 11c), and a common circuit node o. The common circuit node o is also referred to as neutral point in the following.

In the following, input nodes a, b, c are also referred to as first, second, and third input nodes, input voltages Va, Vb, Vc are referred to as first, second, and third input voltages, and input stages 2a, 2b, 2c are referred to as first, second, and third input stages.

The output circuit 3 is coupled to the second winding 12a, 12b, 12c of each of the transformers 1a, 1b, 1c and the output p, n. When the power converter is in operation, a load Z (illustrated in dashed lines) may be connected to the output p, n in order to be supplied by the power converter. According to one example, the power converter is configured to regulate one of an output current Ipn and an output voltage Vpn available at the output p, n. The output voltage Vpn is a direct voltage, for example. Various kinds of loads that are configured to receive a direct voltage may be supplied by the power converter. According to one example, the load is a battery. If the load Z is a battery, the voltage between first and second output nodes p, n of the output may be defined by the battery and the power converter may be configured to regulate the output current Ipn received by the battery from the power converter for charging the battery.

A conventional method of operating a power converter of the type illustrated in Figure 1 includes operating each of the input stages 2a, 2b, 2c in a switched mode such that across each of the first winding 11a, 11b, 11c an alternating voltage is generated based on the respective input voltage Va, Vb, Vc. Referring to the above, the input voltages Va, Vb, Vc are alternating input voltages. The alternating voltages generated across the first winding 11a, 11b, 11c of each transformers 1a, 1b, 1c have a much higher frequency than the alternating input voltages Va, Vb, Vc. The frequency of the alternating voltages generated across the first windings 11a, 11b, 11c is at least 100 times the frequency of the input voltages Va, Vb, Vc, for example. The input stages 2a, 2b, 2c may be operated synchronously at the same frequency and with the same duty cycle. The output circuit 3 generates the output voltage Vpn and the output current Ipn based on voltages across the second windings 12a, 12b, 12c which receive energy from the first windings 11a, 11b, 11c due to the inductive coupling between the first windings 11a, 11b, 11c and the second windings 12a, 12b, 12c.

In the conventional method of operating the power converter, an electrical potential at the common circuit node (neutral point) o is not exactly defined and may vary in an undefined manner. This is undesirable.

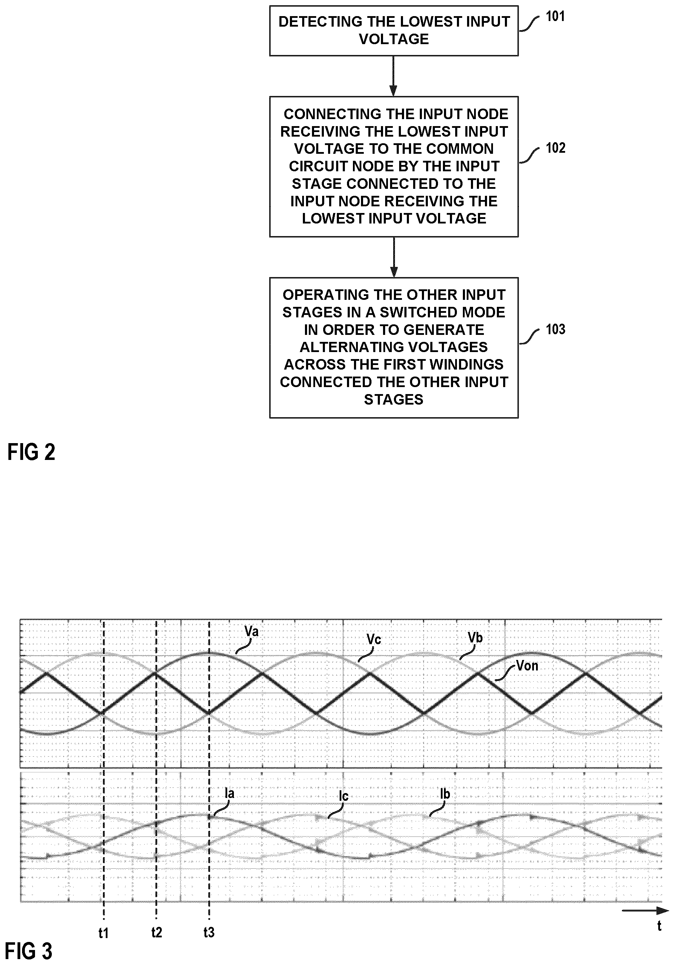

Figure 2 illustrates one example of a method for operating a power converter of the type illustrated in Figure 1, wherein this method helps to avoid an undefined electrical potential at the neutral point o. Referring to Figure 2, the method includes (101) detecting the lowest input voltage; (102) connecting the input node receiving the lowest input voltage to the common circuit node by the input stage that is connected to the input node receiving the lowest input voltage; and (103) operating the other (two) input stages in a switched mode in order to generate alternating voltages across the first windings connected to the other input stages. The "lowest input voltage" is that one of the three input voltages Va, Vb, Vc that instantaneously has the lowest magnitude of the three input voltages Va, Vb, Vc. The "other input stages" are the two input stages connected to the input nodes that do not receive the lowest input voltage.

In the method according to Figure 2, by coupling the neutral point o to that one of the input nodes a, b, c receiving the lowest input voltage, the electrical potential of the neutral point o is defined by the lowest input voltage and, therefore, is never undefined.

Operating the other input stages in a switched mode to generate alternating voltages across the first windings connected to the other input stages may include operating the other input stages in a conventional way. One example for operating the other input stages is explained herein further below.

The method according to Figure 2 is explained in the following with reference to signal diagrams illustrated in Figure 3. Figure 3 shows signal diagrams of the input voltages Va, Vb, Vc, input currents Ia, Ib, Ic received at the input nodes a, b, c, and the electrical potential Von at the neutral point o relative to the reference node n. Figures3 shows the signal diagrams over several periods of the input voltages Va, Vb, Vc.

Referring to Figure 3, the input voltages Va, Vb, Vc may be sinusoidal input voltages, such as sinusoidal input voltages are provided by a three-phase power grid. Referring to Figure 3, there is a phase shift between each pair of these input voltages Va, Vb, Vc, wherein the phase shift is 120° (2π/3), for example. A frequency of the input voltages Va, Vb, Vc, which is the reciprocal of the duration of one period, is 50 Hz or 60 Hz, for example. An RMS (root mean square) value of the input voltages Va, Vb, Vc is 230 $V_{RMS}$ or 110 $V_{RMS}$, for example (wherein the three input voltages Va, Vb, Vc have the same RMS value). The amplitude of each of the input voltages Va, Vb, Vc is $\sqrt{2}$ times the RMS value. As can be seen from Figure 3, each of the three sinusoidal input voltages Va, Vb, Vc periodically changes between a negative minimum voltage level and a positive maximum voltage level. The magnitude (absolute value) of the minimum voltage level equals the magnitude of the maximum voltage level and equals the amplitude.

Over one period of an input voltage system that includes the three input voltages Va, Vb, Vc at each time (except for time instances at which two of the three voltages Va, Vb, Vc cross) one of the input voltages Va, Vb, Vc is the highest input voltage, one of the input voltages Va, Vb, Vc is the second highest input voltage, and one of the input voltages Va, Vb, Vc is the lowest input voltage. It should be noted that "highest", "second highest" and "lowest" relates to the magnitude of the respective voltage, so that the highest input voltage is that one of the input voltages Va, Vb, Vc that has the highest magnitude, the second highest input voltage is that one of the input voltages Va, Vb, Vc that has the second highest magnitude, and the lowest input voltage is that one of the input voltages Va, Vb, Vc that has the lowest magnitude.

As the input voltages Va, Vb, Vc are alternating input voltages and are out of phase with each other, the input voltage being the highest input voltage, the input voltage being the second highest input voltage, and the input voltage being the lowest input voltage changes several times over one period of the input voltages Va, Vb, Vc. As can be seen from Figure 3, the input voltage being the highest input voltage is the same for a certain time period, the input voltage being the second highest input voltage is the same for a certain time period, and the input voltage being the lowest input voltage is the same for a certain time period. More specifically, in an input voltage system that includes three sinusoidal input voltages with a mutual phase shift of 120° there are 12 different time segments in each period of the input voltage system such that during each of these 12 different times segments the same input voltage is the lowest input voltage. The duration of each of the 12 times segments is 1/12 (30°, π/6) of one period of the input voltage system.

In a time segment between first and second time instances t1, t2, for example, input voltage Va is the lowest input voltage, and in a time segment between second and third time instances t2, t3, for example, input voltage Vb is the lowest input voltage.

As can be seen from Figure 3, at each time, the electrical potential Von at the neutral point o relative to the reference node n (which equals the voltage between the neutral point and the reference node n) is well-defined by the instantaneously lowest input voltage.

Further, as can be seen by comparing the signal waveforms of the input voltage Va, Vb, Vc and the signal waveforms of the respective input currents Ia, Ib, Ic, the power converter is a PFC converter. This includes that the input voltages Va, Vb, Vc and the input currents Ia, Ib, Ic essentially have the same signal waveforms in order to control a power factor of an input power received at the input nodes a, b, c. The input voltages Va, Vb, Vc and the input currents Ia, Ib, Ic may be in phase, so that each input current Ia, Ib, Ic is essentially proportional to the respective input voltage Va, Vb, Vc. It should be noted that due to the switched mode operation of the other two input stages the respective input currents may include current ripples. Thus, "the input currents Ia, Ib, Ic essentially having the same signal waveforms as the input voltages Va, Vb, Vc" relates to signal waveforms of the average input currents Ia, Ib, Ic, wherein the average relates to the average over time periods that include one or more drive cycles of the switched mode operation of the other two input stages.

The PFC functionality of the power converter is a direct consequence of operating the other two input stages in the switched mode. The second windings 12a, 12b, 12c are connected at their second circuit nodes and each of the first windings 11a, 11b, 11c is inductively coupled with a respective second winding 12a, 12b, 12c. Furthermore, the sum of the input currents Ia, Ib, Ic is zero (Ia+Ib+Ic=0). By operating two of the input stages 1a, 1b, 1c in the switched mode, the currents flowing in these input stages are regulated and well defined and, consequently, the current flowing in the input stage that is statically operated is well-defined, and the PFC functionality is still guaranteed.

Referring to Figure 1, the power converter further includes a control circuit 4 that is configured to control operation of the power converter in the way explained with reference to Figure 2. More specifically, the control circuit 4 is configured to control operation of the input circuit 2 and the output circuit 3. In Figure 1, reference sign S2 represents one or more control signals generated by the control circuit 4, received by the input circuit 2, and controlling operation of the input circuit 2. Furthermore, reference sign S3 represents one or more control signals generated by the control circuit 4, received by the output circuit 3, and controlling operation of the output circuit 3.

For detecting the lowest input voltage, the control circuit 4 receives measurement values Va', Vb', Vc' which are referred to as measured input voltages in the following and which each represent one of the input voltages Va, Vb, Vc. The measured input voltages Va', Vb', Vc' are generated based on the input voltages Va, Vb, Vc using conventional voltage sensors, for example. According to one example, each of the measured input voltages Va', Vb', Vc' is at least approximately proportional to the respective input voltage Va, Vb, Vc. Based on the measured input voltage Va', Vb', Vc', the control circuit 4 is configured to detect the lowest input voltage. Furthermore, the control circuit 4 is configured (a) to operate that one of the three input stages 2a, 2b, 2c that is connected to that one of the three input nodes a, b, c that receives the lowest input voltage such that it connects the input node receiving the lowest input voltage to the neutral point o, and (b) to operate the other two input stages in the switched mode.

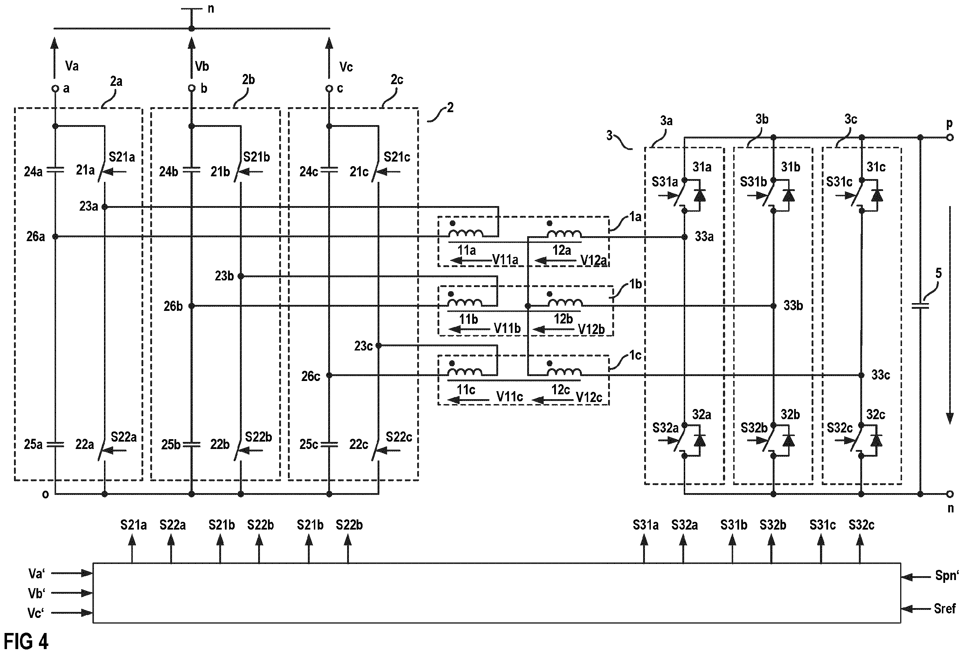

Figure 4 illustrates one example of the input circuit 2 and the output circuit 3 in greater detail. In the example illustrated in Figure 4, each input stage 2a, 2b, 2c includes a switch half-bridge with a first switch 21a, 21b, 21c and a second switch 22a, 22b, 22c connected in series between the respective input node a, b, c and the neutral point o. The first and second switches 21a-21c, 22a-22c of each input stage 2a, 2b, 2c are connected at a circuit node 23a, 23b, 23c, which is referred to as first switched node in the following. Furthermore, each of the input stages 2a, 2b, 2c includes a capacitor half-bridge with a first capacitor 24a, 24b, 24c and a second capacitor 25a, 25b, 25c connected in series between the respective input node a, b, c and the neutral point o. The first and second capacitors 24a-24c, 25a-25c of each input stage 2a, 2b, 2c are connected at a circuit node 26a, 26b, 26c, which is referred to as second switched node the following. The switch half-bridge and the capacitor half-bridge of each input stage 2a, 2b, 2c form a full-bridge with two switched nodes, the first switched node 23a, 23b, 23c of the switch half-bridge and the second switched node 26a, 26b, 26c of the capacitor half-bridge

Referring to the above, each input stage 2a, 2b, 2c is connected to the first winding 11a, 11b, 11c of a respective one of the transformers 1a, 1b, 1c. In the example illustrated in Figure 4, the first winding 11a, 11b, 11c is connected between the first switched node 23a, 23b, 23c and the second switched node 26a, 26b, 26c of the full bridge of the respective input stage 2a, 2b, 2c. More specifically, a first circuit node of the first winding 11a, 11b, 11c is connected to the first switched node 23a, 23b, 23c of the respective input stage 2a, 2b, 2c, and a second circuit node of the first winding 11a, 11b, 11c is connected to the second switched node 26a, 26b, 26c of the respective input stage 2a, 2b, 2c.

Each of the first and second switches 21a-21c, 22a-22c is configured to operate in an on-state (switched-on state) or an off-state (switched-off state) dependent on a drive signal S21a-S21c, S22a-S22c received at a control input of the respective switch 21a-21c, 22a-22c and generated by the control circuit 4.

Referring to the above, that one of the input stages 2b, 2b, 2c that is connected to the input node that receives the lowest input voltage is operated such that it connects the input node to the neutral point o. For this, both switches of the switch half-bridge are operated in the on-state at the same time. If, for example, the second input voltage Vb is the lowest input voltage, the second input stage 2b is operated such that the first switch 21b and the second switch 22b of the switch half-bridge are in the on-state at the same time throughout the time period in which the second input voltage Vb is the lowest input voltage, so that the neutral point o is connected to the second input node b and the voltage Von between the neutral point o and the reference node n equals the second input voltage Vb. In this example, the first and third input stages 2a, 2c are operated in the switched mode.

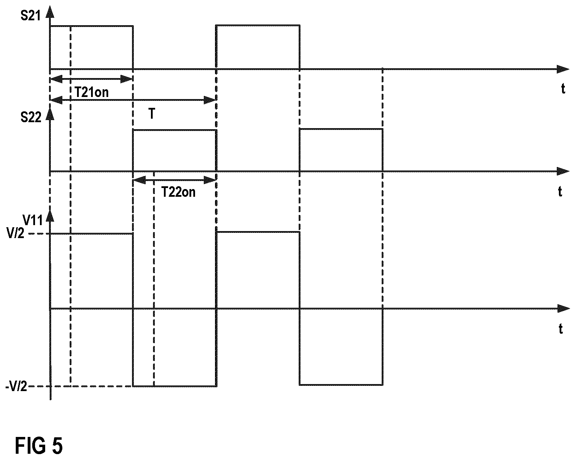

Figure 5 shows signal diagrams that illustrate one example for operating one input stage in the switched node. More specifically, Figure 5 shows signal diagrams of a first drive signal S21 received by the first switch 21 of the switch half-bridge of the respective input stage and a second drive signal S22 received by the second switch 22 of the switch half-bridge of the respective input stage. Each of the first and second drive signals S21, S22 can have an on-level that operates the respective switch in the on-state or an off-level that operates the respective switch in the off-state. Just for the purpose of illustration, in Figure 5, the on-level is a (logic) high signal level and the off-level is a (logic) low signal level.

Referring to Figure 5, operating one input stage in the switched mode includes operating the input stage in a plurality of drive cycles such that in each drive cycle the first switch 21 is in the on-state for a predefined first on-time T21on and the second switch 22 is in the on-state for a predefined second on-time T22on and such that the first and second switches 21, 22 are not switched on at the same time. According to one example, the input stages are operated such that each of the first and second on-times T21on, T22on at least approximately equals 50% of an overall time duration T of each drive cycle, so that a duty cycle of operation of the input stage is at least approximately 50%. Actually, the duty cycle may be slightly less than 50% as there may be a dead time between switching of one of the first and second switches 21, 22 and switching on the other one of the first and second switches 21, 22 in order to avoid a cross current. This dead time, however, is much shorter than the drive period duration T, and is less than 1% of the drive period duration T.

According to one example, the other two input stages are operated at the same switching frequency and synchronously, so that the first switches of the switch half-bridges in the other two input stages are in the on-state during the same time periods and the second switches are in the on-state during the same time periods.

A switching frequency of the switched mode operation one input stage is given by the reciprocal of the time duration T of one drive cycle. Referring to the above, the switching frequency is much higher than the frequency of the input voltages Va, Vb, Vc. According to one example, the switching frequency selected from a range of between 10 kHz and 1 MHz, in particular between 50 kHz and 300 kHz.

According to one example, in the input circuit 2 according to Figure 4, the first and second capacitor 24a-24c, 25a-25c of the capacitor half-bridge essentially have the same capacitances. In this example, the voltages across the first and second capacitors 24a-24c, 25a-25c of each capacitor half-bridge are essentially equal and equal to 50% of the respective input voltage Va, Vb, Vc. In this input circuit 2, the voltages V11a, V11b, V11c across the first winding 11a, 11b, 11c alternate between a positive first voltage level and a negative second voltage level, wherein the magnitude of each of the first and second voltage levels approximately equals 50% of the respective input voltage. The voltage V11a, V11b, V11c across the first winding 11b, 11b, 11c has the first voltage level when the respective first switch 21a, 21b, 21c is in the on-state and the second voltage level when the respective second switch 22a, 22b, 22c is in the on-state. This is illustrated in Figure 5, in which V11 denotes the voltage across the first winding of the input stage controlled by the first and second drive signals S21, S22 illustrated in Figure 5 and in which V denotes the respective input voltage.

The first and second windings 11a-11c, 12a-12c of each transformer 1a, 1b, 1c may have the same winding senses. A voltage V12a, V12b, V12c across the second winding of each transformer 1a, 1b, 1c is defined by the output voltage Vpn and operating states of the output stages 3a, 3b, 3c, which is explained herein further below..

Each of the second windings 12b, 12b, 12c has a first circuit node, and a second circuit node. The first circuit node of each of the second windings 12a, 12b, 12c is connected to the output circuit 3, and the second circuit nodes are connected to each other.

Referring to Figure 4, the output circuit 3 may include three output stages 3a, 3b, 3c, wherein each output stage 3a, 3b, 3c is connected to the first circuit node of the second winding 12a, 12b, 12c of a respective one of the transformers 1a, 1b, 1c. Each output stage 3a, 3b, 3c includes a switch half-bridge with a first switch 31a, 31b, 31c and a second switch 32a, 32b, 32c connected in series between the first and second output nodes p, n. The first and second switches 31a-31c, 32a-32c of each switch half-bridge are connected at a circuit node, which is referred to as third switched node 33a, 33b, 33c in the following and which is connected to the first circuit node of the respective second winding 12a, 12b, 12c.

Each of the first and second switches 31a-31c, 32a-32c is configured to operate in an on-state (switched-on state) or an off-state (switched-off state) dependent on a drive signal S31a-S31c, S32a-S32c received at a control input of the respective switch 31a-31c, 32a-32c and generated by the control circuit 4.

In the following, switch half-bridges of the input stages 2b, 2b, 2c of the input circuit 2 are also referred to as first switch half-bridges or primary side switch half-bridges, and switch half-bridges of the output circuit 3 are also referred to as second switch half-bridges or secondary side switch half-bridges.

According to one example, the secondary side half-bridges of the output stages 3b, 3b, 3c are operated in accordance with space vector modulation (SVM) in order to achieve a PFC functionality, that is, in order to achieve input currents Ia, Ib, Ic with the same signal waveform as the input voltages. This is basically known and is disclosed, for example, in Menzi et al.: New 600V GaN Single-Stage Isolated Bidirectional 400V Input Three-Phase PFC Rectifier", Proceedings of the 15th Annual IEEE Energy Conversion Congress and Exposition (ECCE 2023), Nashville, TN, USA, October 29-November 2, 2023. Thus, no further explanation with regard to operating the output stages 3a, 3b, 3c is required.

Operating the secondary side half-bridges in accordance with space vector modulation results in a switched mode operation of the secondary side half-bridges. Furthermore, there is a phase shift between the switched mode operation of the first and second switches of the secondary side half-bridge and the switched mode operation of the first and second switches of the primary side half-bridge.

By varying the phase shift the input power received by the power converter and, therefore, the output voltage Vpn or the output current Ipn can be regulated. This is also known from Menzi et al., so that no further explanation is required in this regard.

According to one example, the control circuit 4 receives a measurement value Spn' that represents the output signal (output voltage Vpn or output current Ipn) that is to be regulated and is configured to adjust the phase shift between the switched mode operation of the input stages 2a, 2b, 2c not receiving the lowest input voltage and the output stages 3a, 3b, 3c in the output circuit 3 such that the output signal (Vpn or Ipn) to be regulated at least approximately equals a desired output signal reference Sref.

According to one example, the control circuit 4 is configured to calculate a difference between the measured output signal Spn' and the output signal reference Sref and to adjust the phase shift dependent on the calculated difference. According to one example, the phase shift is adjusted using a PI (proportional-integrative) controller that receives the calculated difference.

Referring to the above, statically operating one of the input stages 2a, 2b, 2c such that it connects its input to the neutral point o, the electrical potential at the neutral point is always well-defined. Furthermore, switching losses of the input circuit 2 may be reduced as compared to operating the power converter in a conventional way, as only two of the three input stages 3b, 3b, 3c are operated in the switched mode at the same time. It is commonly known, that switching on and switching off an electronic switch is associated with switching losses. In the method explained above, in the input stage receiving the lowest input voltage the first and second switches of the switch half-bridge are statically operated in the on-state throughout the time period in which the input stage receives the lowest input voltage, while the first and second switches in the switch half-bridges of the other two input stages are operated in a switched mode such that the first and second switches switch on and off a plurality of times throughout the time period in which the input stage receiving the lowest input voltage is statically operated. Thus, the switching losses in the input stage receiving the lowest input voltage are much lower than the switching losses in the other two input stages throughout the time period in which the lowest input voltage is the same.

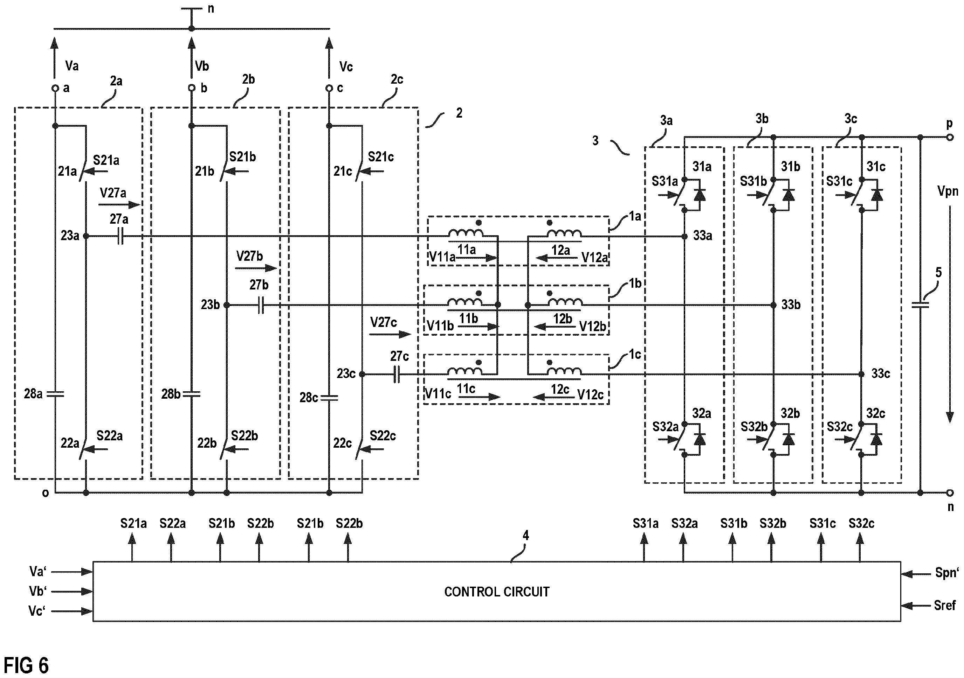

Figure 6 illustrates an input circuit 2 according to another example. The input circuit 2 according to Figure 6 is different from the input circuit according to Figure 4 in that the input stages 2a, 2b, 2c are devoid of capacitor half-bridges and the second circuit nodes of the first windings 11a, 11b, 11c of the transformers 1a, 1b, 1c are connected to each other. Furthermore, a capacitor 27a, 27b, 27c is connected in series with the first winding 11a, 11b, 11c of each transformers 1a, 1b, 1c, wherein the series circuit including the first winding 11a, 11b, 11c and the capacitor 27a, 27b, 27c is connected to the first switched node 23a, 23b, 23c. Optionally, a further capacitor 28a, 28b, 28c is connected in parallel with the switch half-bridge in each input stage 2a, 2b, 2c in order to stabilize the voltage received by the respective switch half-bridge.

The operating principle of the input stages 2a, 2b, 2c of the input circuit 2 is the same as the operating principle of the input circuit 2 according to Figure 4. During operation of the power converter, the voltage V27a, V27b, V27c across each capacitor 27a, 27b, 27c connected in series with a primary winding adjusts to a voltage value that is at least approximately equal to 50% of the instantaneous voltage value of the respective input voltage Va, Vb, Vc. The switched operation of the primary side half-bridges results in alternating voltages V11a, V11b, V11c across the primary windings 11a, 11b, 11c, wherein the voltage value of each of the voltages V11a, V11b, V11c at least approximately equals 50% of the voltage value of the respective input voltage Va, Vb, Vc when the first switch 21a, 21b, 21c is in the on-state and at least approximately equals 50% of the negated voltage value of the respective input voltage Va, Vb, Vc when the second switch 22a, 22b, 22c is in the on-state. The output stages 3a, 3b, 3c are operated in the same way as explained above.

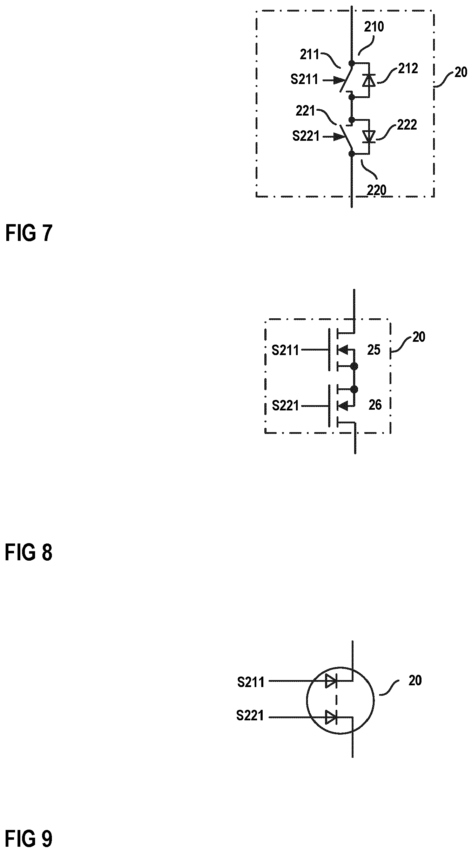

According to one example, the first and second switches 21a-21c, 22a-22c of the input stages 2a, 2b, 2c are bidirectionally blocking electronic switches. A "bidirectionally blocking electronic switch" is an electronic switch that, in the off-state, is configured to block independent of a polarity of a voltage applied across the electronic switch. A bidirectionally blocking electronic switch may be implemented in various ways. Examples are explained with reference to Figures 7-9 in the following. In these figures, reference number 20 denotes an arbitrary one of the electronic switches 21a-21c, 22a-22c in the input stages 2a, 2b, 2c.

According to Figure 7, the bidirectionally blocking switch 20 may include two unidirectionally blocking electronic switches 25, 26 connected in series. These unidirectionally blocking electronic switches 25, 26 may be referred to as partial switches. A "unidirectionally blocking electronic switch" is an electronic switch that, in the off-state, is configured to block when a voltage applied across the switch has a first polarity and to conduct when the voltage has a second polarity opposite the first polarity. A unidirectionally blocking electronic switch can be considered to include a switching element 211, 221 and a freewheeling element 212, 222, such as a diode, connected in parallel with the switching element 211, 221. In the off-state, the switching element 211, 221 blocks independent of the polarity of the voltage across the electronic switch 210, 220, while the freewheeling element 212, 222 blocks when the voltage has the first polarity and conducts when the voltage has the second polarity.

The unidirectionally blocking electronic switches 210, 220 may be implemented in various ways. Basically, any type of electronic switching element and any type of rectifier element connected in parallel with the switching element may be used to implement one unidirectionally blocking electronic switch.

A MOSFET, for example, is a unidirectionally blocking electronic switch. Thus, as illustrated in Figure 8, the bidirectionally blocking electronic switch 20 may include two MOSFETs (Metal Oxide Semiconductor Field-Effect Transistors) that are connected in series such that internal body diodes of the MOSFETs are connected in anti-series. The body diode of a MOSFET acts as a freewheeling element and makes the MOSFET a unidirectionally blocking electronic switch.

According to another example illustrated in Figure 9, the bidirectionally blocking electronic switch 20 is a bidirectionally blocking gallium nitride (GaN) switch. Such bidirectionally blocking GaN switch includes two GaN HEMTs (High Electron-Mobility Transistors) as partial switches that are connected in series in such a way that internal freewheeling elements are connected in anti-series. According to one example, the two GaN HEMTs are two single GaN HEMTs connected in series. According to another example, the two GaN HEMTs are monolithically integrated and each have a control node but share the same active area. Thus, a monolithic bidirectionally blocking GaN HEMT has the benefit of using the same active area (instead of two different active areas in the case of two single GaN HEMT is connected in series), which results in a reduced on-resistance, which is the electrical resistance in the on-state.

In each case, the bidirectionally blocking electronic switch 20 is configured to receive two drive signals S211, S221. That is, the bidirectionally blocking electronic switch is configured to receive a respective drive signal S211, S221 for each of the two partial switches. The bidirectionally blocking switch is in the off-state when each of the partial switches is in the off-state and is in the on-state when each of the partial switches is in the on-state. In the off-state, the bidirectionally blocking switch blocks independent of the polarity of the voltage applied across the switch. In the on-state, the bidirectionally blocking switch conducts independent of the polarity of the voltage applied across the switch. Each of the two drive signals S211, S221 received by one bidirectionally blocking electronic switch essentially equals the respective drive signal S21a-S21c, S22a-S22c illustrated in Figures 4 and 6, wherein during switch-over between the on-state and the off-state of the bidirectionally blocking switch there may be a short time period in which one of the partial switches is already blocking while the other one of the partial switches is still conducting. This is basically known in the operation of a bidirectionally blocking switch, so that no further explanation is required in this regard.

The electronic switches 31a-31c of the output stages 3b, 3b, 3c are unidirectionally blocking electronic switches, for example. According to one example, these switches are connected between the switched nodes 33a, 33b, 33c and the output nodes p, n such that freewheeling element (rectifier element) of a first switch 31a, 31b, 31c is conducting when the electrical potential at the respective third switched node 33a, 33b, 33c is higher than the electrical potential at the first output node p and the freewheeling element (rectifier element) of a second switch 32a, 32b, 32c is conducting when the electrical potential at the respective third switched node 33a, 33b, 33c Is lower than the electrical potential at the second output node n. Just for the purpose of illustration, the rectifier elements of the unidirectionally blocking electronic switches are illustrated as diodes in the examples illustrated in Figures 4 and 6. According to one example, the first and second switches 31a-31c, 32a-32c of the output circuit 3 are MOSFETs.

Some of the aspects explained above are briefly summarized in the following with reference to numbered examples.

Example 1. A method for operating a power converter, wherein the power converter includes: three input nodes each configured to receive a respective one of three alternating input voltages, and an output; three transformers each including a first winding and a second winding inductively coupled with the first winding; an input circuit with three input stages each coupled to a respective one of the input nodes, the first winding of a respective one of the transformers and a common circuit node; and an output circuit coupled to the second winding of each of the transformers and the output, and wherein the method includes: detecting the lowest input voltage, which is that one of the input voltages having the lowest magnitude; connecting that one of the input nodes receiving the lowest input voltage to the common circuit node by the input stage connected to that one of the input nodes receiving the lowest input voltage; and operating the other input stages in a switched mode in order to generate alternating voltages across the first windings connected the other input stages.

Example 2. The method of example 1, wherein operating the other input stages in the switched mode includes operating the other input stages at a predefined duty cycle.

Example 3. The method of example 2, wherein the predefined duty cycle is at least approximately 50%.

Example 4. The method of any one of examples 1 to 3, wherein the output circuit includes three output stages each connected to the second winding of a respective one of the transformers and to the output, and wherein the method further includes operating the output stages in a switched mode to generate an output signal at the output based on voltages across the second winding.

Example 5. The method of example 4, wherein operating the output stages in the switched mode includes: operating the output stages in accordance with a space vector modulation, and adjusting a phase shift between operating the other input stages in the switched mode and operating the output stages in the switched mode dependent on a difference between the output signal and an output signal reference.

Example 6. The method of any one of the preceding examples, wherein each of the input stages includes a switch half-bridge having a first switch and a second switch connected with each other at a first switched node and connected in series between the respective input node and the common circuit node, and wherein a first circuit node of the first winding of the respective transformer is connected to the first switched node.

Example 7. The method of example 6, wherein each of the input stages further includes a capacitor half-bridge having a first capacitor and a second capacitor connected with each other at a second switched node and connected in series between the respective input node and the common circuit node, and wherein a second circuit node of the first winding of the respective transformer is connected to the second switched node.

Example 8. The method of example 6, wherein each of the input stages further includes a capacitor connected in series with the first winding, and wherein second circuit nodes of the first windings of the transformers are connected to each other.

Example 9. The method of any one of examples 6 to 8, wherein each of the first switch and the second switch of the switch half-bridges is a bidirectionally blocking electronic switch.

Example 10. The method of any one of examples 4 to 9, wherein each of the output stages includes: a switch half-bridge having a first switch and a second switch connected at third switched node and connected in series between output nodes of the output, wherein a first circuit node of the second winding of the respective transformer is connected to the third switched node, and wherein second circuit nodes of the second windings of the transformers are connected to each other.

Example 11. The method of example 10, wherein each of the first switch and the second switch of the switch half-bridge of each output stage is a unidirectionally blocking electronic switch.

Example 12. The method of any one of examples 1 to 11, wherein each of the input voltages is a sinusoidal voltage, and wherein a phase shift between the input voltages is at least approximately 120°.

Example 13. A power converter, including: three input nodes each configured to receive a respective one of three alternating input voltages, and an output; three transformers each including a first winding and a second winding inductively coupled with the first winding; an input circuit with three input stages each coupled to a respective one of the input nodes, the primary winding of a respective one of the transformers and a common circuit node; an output circuit coupled to the second winding of each of the transformers and the output; and a control circuit configured to detect that one of the input voltages having the lowest magnitude to obtain a lowest input voltage, operate the input stage connected to that one of the input nodes receiving the lowest input voltage such that the one of the input nodes receiving the lowest input voltage is connected to the common circuit node, and operate the other input stages in a switched mode in order to generate alternating voltages across the first windings connected the other input stages.

**Claims**

1. A method for operating a power converter, wherein the power converter comprises:

   three input nodes (a, b, c) each configured to receive a respective one of three alternating input voltages (Va, Vb, Vc), and an output (p, n); three transformers (1a, 1b, 1c) each comprising a first winding (11a, 11b, 11c) and a second winding (12a, 12b, 12c) inductively coupled with the first winding (11a, 11b, 11c); an input circuit (2) with three input stages (2a, 2b, 2c) each coupled to a respective one of the input nodes (a, b, c), the first winding (11a, 11b, 11c) of a respective one of the transformers (1b, 1b, 1c) and a common circuit node (o); and an output circuit (3) coupled to the second winding (12a, 12b, 12c) of each of the transformers (1a, 1b, 1c) and the output (p, n), and wherein the method comprises:

   detecting the lowest input voltage, which is that one of the input voltages (Va, Vb, Vc) having the lowest magnitude; connecting that one of the input nodes (a, b, c) receiving the lowest input voltage to the common circuit node (o) by the input stage connected to that one of the input nodes (a, b, c) receiving the lowest input voltage; and operating the other input stages in a switched mode in order to generate alternating voltages across the first windings connected the other input stages.

2. The method of claim 1, wherein operating the other input stages in the switched mode comprises operating the other input stages (1a, 1b, 1c) at a predefined duty cycle.

3. The method of claim 2, wherein the predefined duty cycle is at least approximately 50%.

4. The method of any one of claims 1 to 3,

   wherein the output circuit (3) comprises three output stages (3a, 3b, 3c) each connected to the second winding (12a, 12b, 12c) of a respective one of the transformers (1a, 1b, 1c) and to the output (p, n), and wherein the method further comprises operating the output stages (3a, 3b, 3c) in a switched mode to generate an output signal (Vpn; Ipn) at the output (p, n) based on voltages across the second winding (12a, 12b, 12c).

5. The method of claim 4, wherein operating the output stages (3b, 3b, 3c) in the switched mode comprises:

   operating the output stages (3a, 3b, 3c) in accordance with a space vector modulation, and adjusting a phase shift between operating the other input stages in the switched mode and operating the output stages (3a, 3b, 3c) in the switched mode dependent on a difference between the output signal (Vpn; Ipn) and an output signal reference.

6. The method of any one of the preceding claims,

   wherein each of the input stages (2a, 2b, 2c) comprises a switch half-bridge having a first switch (21a, 21b, 21c) and a second switch (22a, 22b, 22c) connected with each other at a first switched node (23a, 23b, 23c) and connected in series between the respective input node (a, b, c) and the common circuit node (o), and wherein a first circuit node of the first winding (11a, 11b, 11c) of the respective transformer (1b, 1b, 1c) is connected to the first switched node (23a, 23b, 23c).

7. The method of claim 6,

wherein each of the input stages (2b, 2b, 2c) further comprises a capacitor half-bridge having a first capacitor (24a, 24b, 24c) and a second capacitor (25a, 25b, 25c) connected with each other at a second switched node (26a, 26b, 26c) and connected in series between the respective input node (a, b, c) and the common circuit node (o), and

wherein a second circuit node of the first winding (11a, 11b, 11c) of the respective transformer (1a, 1b, 1c) is connected to the second switched node (26a, 26b, 26c).

8. The method of claim 6,

wherein each of the input stages (2a, 2b, 2c) further comprises a capacitor (28a, 28b, 28c) connected in series with the first winding (11a, 11b, 11c), and

wherein second circuit nodes of the first windings (11a, 11b, 11c) of the transformers (1a, 1b, 1c) are connected to each other.

9. The method of any one of claims 6 to 8, wherein each of the first switch (21a, 21b, 21c) and the second switch (22a, 22b, 22c) of the switch half-bridges is a bidirectionally blocking electronic switch.

10. The method of any one of claims 4 to 9, wherein each of the output stages (3a, 3b, 3c) comprises:

a switch half-bridge having a first switch (31a, 31b, 31c) and a second switch (32a, 32b, 32c) connected at third switched node (33a, 33b, 33c) and connected in series between output nodes of the output (p, n),

wherein a first circuit node of the second winding (12a, 12b, 12c) of the respective transformer (1a, 1b, 1c) is connected to the third switched node (33a, 33b, 33c), and

wherein second circuit nodes of the second windings (12a, 12b, 12c) of the transformers (1a, 1b, 1c) are connected to each other.

11. The method of claim 10, wherein each of the first switch (31a, 31b, 31c) and the second switch (32a, 32b, 32c) of the switch half-bridge of each output stage (3a, 3b, 3c) is a unidirectionally blocking electronic switch.

12. The method of any one of claims 1 to 11,

wherein each of the input voltages (Va, Vb, Vc) is a sinusoidal voltage, and

wherein a phase shift between the input voltages (Va, Vb, Vc) is at least approximately 120°.

13. A power converter, comprising:

three input nodes (a, b, c) each configured to receive a respective one of three alternating input voltages (Va, Vb, Vc), and an output (p, n); three transformers (1a, 1b, 1c) each comprising a first winding (11a, 11b, 11c) and a second winding (12a, 12b, 12c) inductively coupled with the first winding (11a, 11b, 11c); an input circuit (2) with three input stages (2b, 2b, 2c) each coupled to a respective one of the input nodes (a, b, c), the primary winding (11a, 1 1b, 11c) of a respective one of the transformers (1b, 1b, 1c) and a common circuit node (o); an output circuit (3) coupled to the second winding (12a, 12b, 12c) of each of the transformers (1a, 1b, 1c) and the output (p, n); and a control circuit configured to detect that one of the input voltages (Va, Vb, Vc) having the lowest magnitude to obtain a lowest input voltage, operate the input stage connected to that one of the input nodes (a, b, c) receiving the lowest input voltage such that the one of the input nodes (a, b, c) receiving the lowest input voltage is connected to the common circuit node (o), and operate the other input stages in a switched mode in order to generate alternating voltages across the first windings connected the other input stages.

**Amended claims in accordance with Rule 137(2) EPC.**

1. A method for operating a power converter, wherein the power converter comprises:

three input nodes (a, b, c) each configured to receive a respective one of three alternating input voltages (Va, Vb, Vc), and an output (p, n); three transformers (1a, 1b, 1c) each comprising a first winding (11a, 11b, 11c) and a second winding (12a, 12b, 12c) inductively coupled with the first winding (11a, 11b, 11c); an input circuit (2) with three input stages (2a, 2b, 2c) each coupled to a respective one of the input nodes (a, b, c), the first winding (11a, 11b, 11c) of a respective one of the transformers (1b, 1b, 1c) and a common circuit node (o); and an output circuit (3) coupled to the second winding (12a, 12b, 12c) of each of the transformers (1a, 1b, 1c) and the output (p, n), and wherein the method comprises:

detecting the lowest input voltage, which is that one of the input voltages (Va, Vb, Vc) having the lowest magnitude; connecting that one of the input nodes (a, b, c) receiving the lowest input voltage to the common circuit node (o) by the input stage connected to that one of the input nodes (a, b, c) receiving the lowest input voltage; and operating the other input stages in a switched mode in order to generate alternating voltages across the first windings connected the other input stages, wherein each of the input stages (2a, 2b, 2c) comprises a switch half-bridge having a first bidirectionally blocking electronic switch (21a, 21b, 21c) and a second bidirectionally blocking electronic switch (22a, 22b, 22c) connected with each other at a first switched node (23a, 23b, 23c) and connected in series between the respective input node (a, b, c) and the common circuit node (o), and wherein a first circuit node of the first winding (11a, 11b, 11c) of the respective transformer (1b, 1b, 1c) is connected to the first switched node (23a, 23b, 23c).

2. The method of claim 1, wherein operating the other input stages in the switched mode comprises operating the other input stages (1a, 1b, 1c) at a predefined duty cycle.

3. The method of claim 2, wherein the predefined duty cycle is at least approximately 50%.

4. The method of any one of claims 1 to 3,

   wherein the output circuit (3) comprises three output stages (3a, 3b, 3c) each connected to the second winding (12a, 12b, 12c) of a respective one of the transformers (1a, 1b, 1c) and to the output (p, n), and wherein the method further comprises operating the output stages (3a, 3b, 3c) in a switched mode to generate an output signal (Vpn; Ipn) at the output (p, n) based on voltages across the second winding (12a, 12b, 12c).

5. The method of claim 4, wherein operating the output stages (3b, 3b, 3c) in the switched mode comprises:

   operating the output stages (3a, 3b, 3c) in accordance with a space vector modulation, and adjusting a phase shift between operating the other input stages in the switched mode and operating the output stages (3a, 3b, 3c) in the switched mode dependent on a difference between the output signal (Vpn; Ipn) and an output signal reference.

6. The method of any one of claims 1 to 5,

   wherein each of the input stages (2b, 2b, 2c) further comprises a capacitor half-bridge having a first capacitor (24a, 24b, 24c) and a second capacitor (25a, 25b, 25c) connected with each other at a second switched node (26a, 26b, 26c) and connected in series between the respective input node (a, b, c) and the common circuit node (o), and wherein a second circuit node of the first winding (11a, 11b, 11c) of the respective transformer (1a, 1b, 1c) is connected to the second switched node (26a, 26b, 26c).

7. The method of any one of claims 1 to 5,

   wherein each of the input stages (2a, 2b, 2c) further comprises a capacitor (28a, 28b, 28c) connected in series with the first winding (11a, 11b, 11c), and wherein second circuit nodes of the first windings (11a, 11b, 11c) of the transformers (1a, 1b, 1c) are connected to each other.

8. The method of any one of claims 4 to 8, wherein each of the output stages (3a, 3b, 3c) comprises:

   a switch half-bridge having a first switch (31a, 31b, 31c) and a second switch (32a, 32b, 32c) connected at third switched node (33a, 33b, 33c) and connected in series between output nodes of the output (p, n), wherein a first circuit node of the second winding (12a, 12b, 12c) of the respective transformer (1a, 1b, 1c) is connected to the third switched node (33a, 33b, 33c), and wherein second circuit nodes of the second windings (12a, 12b, 12c) of the transformers (1a, 1b, 1c) are connected to each other.

9. The method of claim 8, wherein each of the first switch (31a, 31b, 31c) and the second switch (32a, 32b, 32c) of the switch half-bridge of each output stage (3a, 3b, 3c) is a unidirectionally blocking electronic switch.

10. The method of any one of claims 1 to 9,

    wherein each of the input voltages (Va, Vb, Vc) is a sinusoidal voltage, and wherein a phase shift between the input voltages (Va, Vb, Vc) is at least approximately 120°.

11. A power converter, comprising:

    three input nodes (a, b, c) each configured to receive a respective one of three alternating input voltages (Va, Vb, Vc), and an output (p, n); three transformers (1a, 1b, 1c) each comprising a first winding (11a, 11b, 11c) and a second winding (12a, 12b, 12c) inductively coupled with the first winding (11a, 11b, 11c); an input circuit (2) with three input stages (2b, 2b, 2c) each coupled to a respective one of the input nodes (a, b, c), the primary winding (11a, 11b, 11c) of a respective one of the transformers (1b, 1b, 1c) and a common circuit node (o); an output circuit (3) coupled to the second winding (12a, 12b, 12c) of each of the transformers (1a, 1b, 1c) and the output (p, n); and a control circuit configured to

detect that one of the input voltages (Va, Vb, Vc) having the lowest magnitude to obtain a lowest input voltage,

operate the input stage connected to that one of the input nodes (a, b, c) receiving the lowest input voltage such that the one of the input nodes (a, b, c) receiving the lowest input voltage is connected to the common circuit node (o), and operate the other input stages in a switched mode in order to generate alternating voltages across the first windings connected the other input stages,

wherein each of the input stages (2a, 2b, 2c) comprises a switch half-bridge having a first bidirectionally blocking electronic switch (21a, 21b, 21c) and a second bidirectionally blocking electronic switch (22a, 22b, 22c) connected with each other at a first switched node (23a, 23b, 23c) and connected in series between the respective input node (a, b, c) and the common circuit node (o), and

wherein a first circuit node of the first winding (11a, 11b, 11c) of the respective transformer (1b, 1b, 1c) is connected to the first switched node (23a, 23b, 23c).

FIG 1

DETECTING THE LOWEST INPUT VOLTAGE — 101

↓

CONNECTING THE INPUT NODE RECEIVING THE LOWEST INPUT VOLTAGE TO THE COMMON CIRCUIT NODE BY THE INPUT STAGE CONNECTED TO THE INPUT NODE RECEIVING THE LOWEST INPUT VOLTAGE — 102

↓

OPERATING THE OTHER INPUT STAGES IN A SWITCHED MODE IN ORDER TO GENERATE ALTERNATING VOLTAGES ACROSS THE FIRST WINDINGS CONNECTED THE OTHER INPUT STAGES — 103

FIG 2

FIG 3

FIG 4

**FIG 5**

FIG 6

FIG 7

FIG 8

FIG 9

Europäisches
Patentamt
European
Patent Office
Office européen
des brevets

# EUROPEAN SEARCH REPORT

**Application Number**

EP 24 19 0108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MENZI DAVID ET AL: "Novel Three-Phase Electronic Transformer", IEEE TRANSACTIONS ON POWER ELECTRONICS, INSTITUTE OF ELECTRICAL AND ELECTRONICS ENGINEERS, USA, vol. 39, no. 5, 15 February 2024 (2024-02-15), pages 5027-5033, XP011964288, ISSN: 0885-8993, DOI: 10.1109/TPEL.2024.3366752 [retrieved on 2024-02-16] | 1-5,8-13 | INV. H02M1/42 H02M7/217 H02M5/22 |
| Y | * page 5027 - page 5030; figures 1,2 * | 6,7,9 | |
| | ----- | | |
| A | MENZI D ET AL: "Novel Bidirectional Single-Stage Isolated Three-Phase Buck-Boost PFC Rectifier System", 2023 IEEE APPLIED POWER ELECTRONICS CONFERENCE AND EXPOSITION (APEC), IEEE, 19 March 2023 (2023-03-19), pages 1936-1944, XP034350471, DOI: 10.1109/APEC43580.2023.10131553 [retrieved on 2023-05-31] * page 1936 - page 1937; figure 1 * | 1-13 | |
| | ----- | | **TECHNICAL FIELDS SEARCHED (IPC)** |
| Y | MENZI DAVID ET AL: "New 600V GaN Single-Stage Isolated Bidirectional 400V Input Three-Phase PFC Rectifier", 2023 IEEE ENERGY CONVERSION CONGRESS AND EXPOSITION (ECCE), IEEE, 29 October 2023 (2023-10-29), pages 6529-6531, XP034508061, DOI: 10.1109/ECCE53617.2023.10362864 [retrieved on 2023-12-29] * page 6530; figure 3 * | 6,7,9 | H02M |
| | ----- | | |

The present search report has been drawn up for all claims

| Place of search | Date of completion of the search | Examiner |
|---|---|---|
| The Hague | 12 December 2024 | Gusia, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MENZI et al.** New 600V GaN Single-Stage Isolated Bidirectional 400V Input Three-Phase PFC Rectifier. *Proceedings of the 15th Annual IEEE Energy Conversion Congress and Exposition (ECCE 2023), Nashville, TN, USA*, 29 October 2023